Europäisches Patentamt

European Patent Office

Office européen des brevets

(11) Publication number: **0 198 106**
A1

(12) **EUROPEAN PATENT APPLICATION**

(21) Application number: 85108674.4

(22) Date of filing: 11.07.85

(51) Int. Cl.⁴: **F 16 M 11/22,** G 03 B 17/56

(30) Priority: **19.03.85 JP 40449/85**

(43) Date of publication of application: **22.10.86**
**Bulletin 86/43**

(84) Designated Contracting States: **DE FR GB IT**

(71) Applicant: **Kawazoe, Michio, 30-11,5-chome Narita**
**Higashi Suginami-ku, Tokyo (JP)**

(72) Inventor: **Kawazoe, Michio, 30-11,5-chome Narita**
**Higashi Suginami-ku, Tokyo (JP)**

(74) Representative: **Walter, Helmut, Aubingerstrasse 81,**
**D-8000 München 60 (DE)**

(54) **An adapter for tripods.**

(57) An adapter for tripods in which a slider (4) is mounted on one leg (2) of the body slidably and secureably at any position of the leg (2). One end of a handle (7) is pivoted on the slider (4). On the other end of the handle (7) are rotatably mounted a screw (8) for attaching pan head camera, light source etc. Said screw is engaged by a female threaded hole of the slider (6).

EP 0 198 106 A1

0198106

K 68 EP 114

Applicant: Michio Kawazoe, 30-11, 5 chome Narita Higashi, Suginami-ku, Tokyo

## AN ADAPTER FOR TRIPODS

This invention relates to an adapter for tripods for carrying, for close up photography, for photographic copying work, low angle photography, for supporting two cameras or lights etc. by one tripod.

Heretofor, a tripod, especially large size or middle size tripod, is carried by grasping its one leg while folded, but it is inconvenient for carrying. Moreover, it is impossible to support the camera or light except pan head and also impossible to support more than one camera or light.

This invention intends to climinate said drawbacks and to provide an adapter for tripods case for carrying, able to support a video or still camera, light etc. another part of a pan head, at low position with the shrinked legs contracted for low angle photography, and close up photography.

The above and other features of the invention will be fully understood from the following detailed description and the accompanying drawings.

Fig.1 is a side view of an embodiment of this invention in the folded state,

Fig.2 is an enlarged view of the essential part of the embodiment,

Fig.3 is a perspective view in the expanded state of the handle,

Fig.4 is a side view of an another embodiment of this invention,

Fig.5 is a side view of the embodiment in the opened state of the handle,

Fig.6a is a perspective of the slider 3a,

Fig.6b and c are cross section of the sliders 3a, 4a.

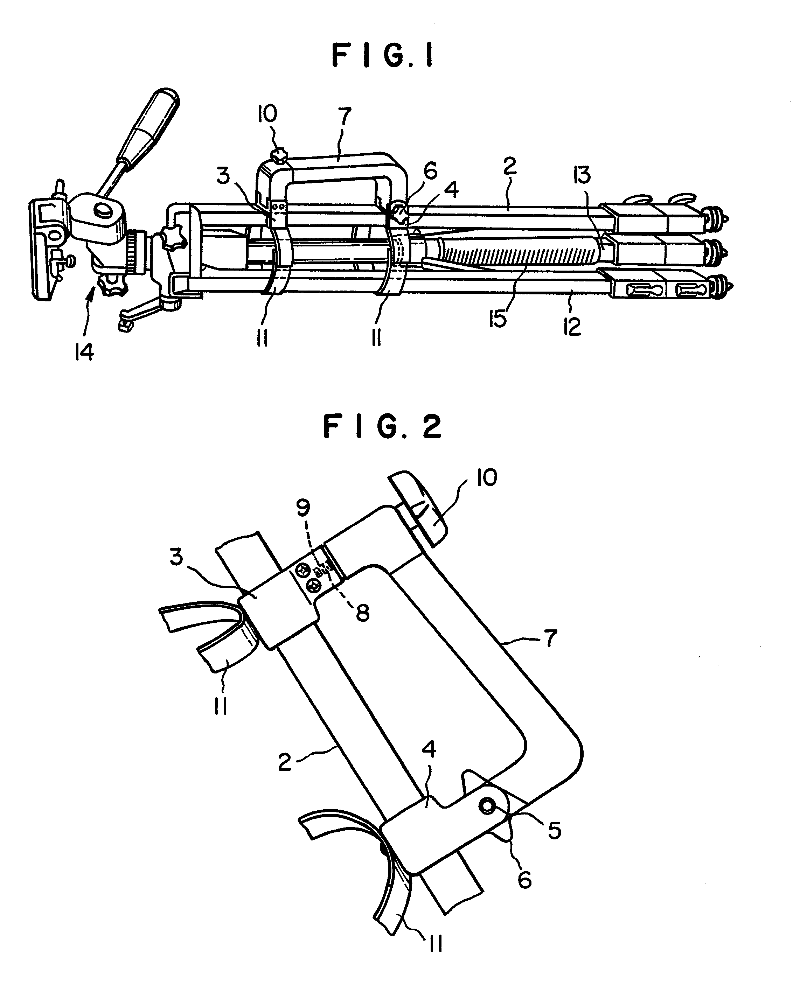

As shown in Figs.1-3, one leg 2 of the tripod body 1 supports a pair of sliders 3,4. One slider 3 is fixed on the leg 2, while other slider 4 is mounted slidably and secured in any desired position by securing screw 5,6 is a handle of the screw 5. On the slider 4, a U shaped handle 7 is pivoted, a screw 8 is mounted on the other end of the handle 7. A female threaded hole 9 is provided on the slider 3. The shape of the handle 7 is not limited to a U but L shape, curved shape or another shaped may be used. The slider 3,4 may be connected each other. 10 is a handle for rotating the screw 8. 11 is a band at the reverse side of slider 3,4 for handling the legs 2,12,13. 14 is a pan head of the tripod 1. 15 is a elevator of the tripod. These parts are same as a conventional tripod.

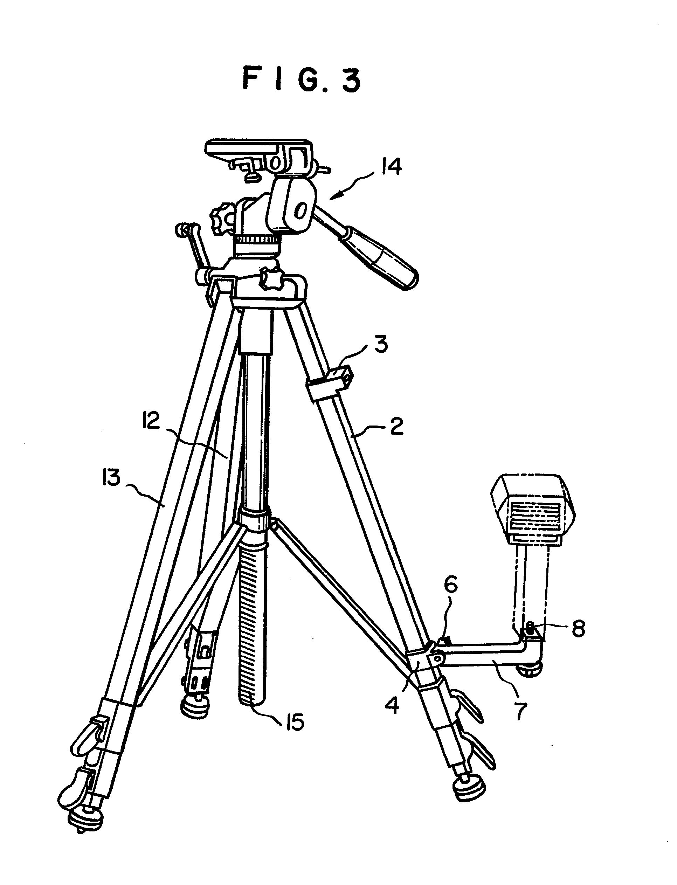

Operation of the device are as follows;
As shown in Fig.1, in carrying state, legs 2,12,13 are contracted and folded, the screw 8 is engaged in the female thread hole 9 of the slider 3 and handle 7 is connected to the slider 3. The tripod body 1 is easily carried by the handle 7. It is better to handle the legs by using band 11. In use, as shown in Fig.3, legs 2,12,13 are spread and extended. Screw 8 is disengaged from the female threaded hole 9 and the screw 5 loosened, then slider 4 can be moved freely on the leg 2. The slider 4 is brought the lower part of the leg 2 and rotate the handle 7 outwardly to the horizontal position, then the thread 8 points upward. Therefore, it is possible to connect camera, strobo light or pan head 14 on the screw 8. If the legs 2,12,13 are contracted, they are put at lower position. Fig.3 shows strobo light put on the screw 8 of the handle 7. If the pan head 14 is put on the screw 8 and a camera mounted on the pan head 14 and the camera turned in downward direction, the camera faces toward the ground and photographic copying work is possible.

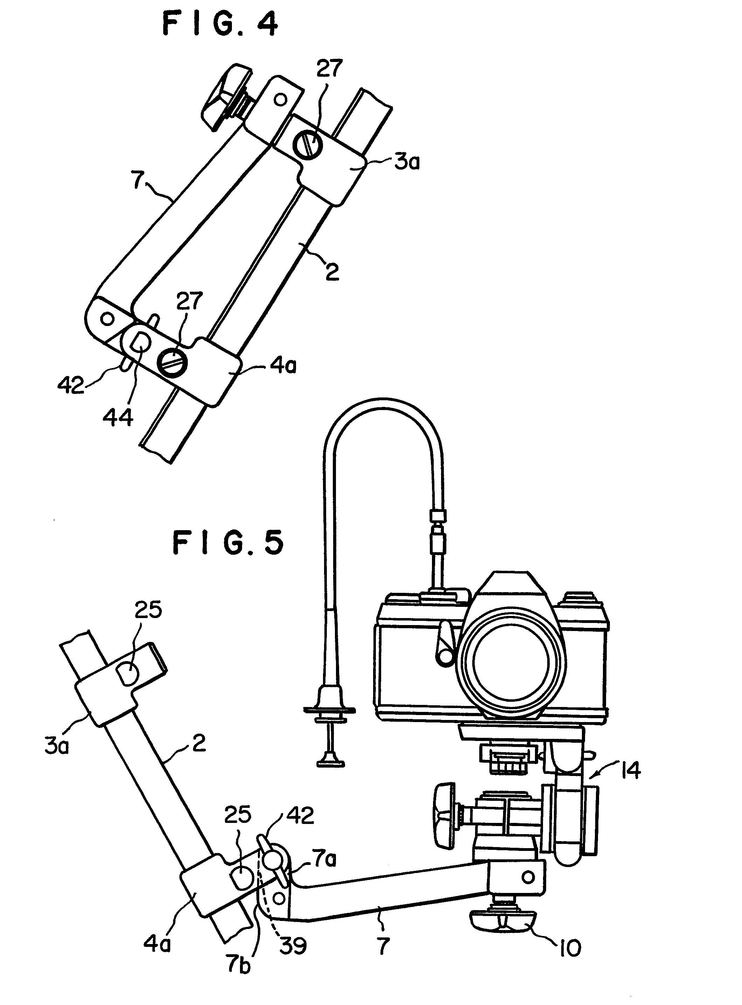

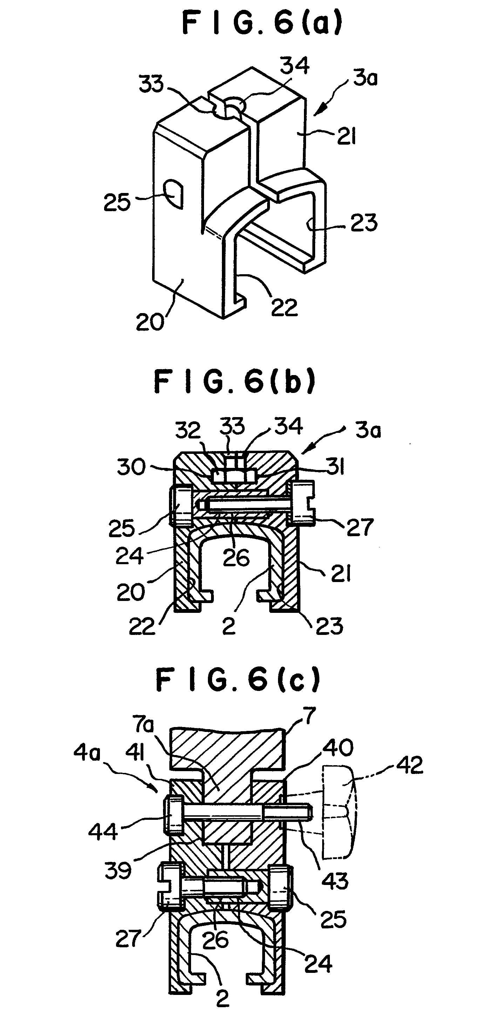

Figs.4,5,6 show another embodiment of this invention. As shown in Fig.6a,b slider 3a is formed by a pair of symmetrical half parts 20,21. These half parts 20,21 have a cavity 22,23 fitting on said leg 2 shallow, sleeve 25 having female threaded hole 24 is fixed on the upper part of the half 20, a male threaded bolt 27 having head 27 is inserted rotatably in the another half 21. The bolt 26 is rotated by engaging coin in the recess provided on the head 27 and entered into said female threaded hole 24. By securing said bolt 26, the slider 3a is fixed on the leg 2, while by loosening the bolt 26, the slider 3a can slide along the leg 2 and by loosening the bolt 26 further more, halves 20,21 separated more and slider 3a can be removed from the leg 2. However, bolt 26 may not be detached from the sleeve 25. A pair of recess 30,31 is provided on the opposing faces of said halves 20,21 and a nut 32 for engaging said screw 8 is inserted in the recesses 30,31 without rotation. A pair of semi circular recesses 33,34 is provided on the faces for inserting said screw 8.

As shown in Fig.6,c, slider 4a is formed by a pair of half parts like slider 3a and has female threaded hole 24 and male threaded bolt 26 similarly. Bearings 40,41 are provided at the upper parts of the slider 4a and an end 7a of the handle 7 is inserted into the space 39 between said bearings 40,41, and pivoted about bolt shaft 44. The bolt 44 has threaded part 43 at its projecting end and secured by threaded screw 43 for fixing handle 7. As shown in Fig.5 at the horizontal position of the handle 7, side face 7b of the handle 7 contacts with the bottom of the space 39.

Operation of the embodiment is like that of Fig.1-4. Fig.5 shows that the pan head 14 is fixed on the handle and camera is supported on the pan head. By operating the pan head 14 it is possible to direct the camera in downward direction and photographic copying work is possible. By loosening the bolt 26 completely, the half 20,21 separate enough to escape the cavity 22,23 from the opposite sides of the leg 2 and slider 4a can be removed from the leg 2.

As explained above, in this invention, it is possible to carry by its handle and it is possible to set camera or light in another part except pan head and two of camera or light can be set on one tripod.

The main utility of this invention is summarized as follows:
1. conveniently carried
2. as a stand for electric flash in a low position
3. as an instant stand for low angle photography,
4. as a simple copystand for close-up,
5. as an additional light-are for video light.

Claim:

1.  An adapter for tripods in which a slider is mounted on one leg of the tripod body slidably and secured at any position of the leg, one end of a handle is pivoted on the slider, a screw for attaching pan head camera, light etc. are mounted rotatably on the other end of the handle, a female threaded hole is provided on another slider for engaging said screw.

0198106

1/4

# F I G. 1

# F I G. 2

# F I G. 3

3/4

# F I G. 4

27

7

3a

2

27

4a

42

44

# F I G. 5

25

3a

2

25

42

7a

4a

39

7b

7

14

10

0198106

# F I G. 6 (a)

# F I G. 6 (b)

# F I G. 6 (c)

0198106
. Application number

**European Patent Office**

**EUROPEAN SEARCH REPORT**

| | **DOCUMENTS CONSIDERED TO BE RELEVANT** | | EP 85108674.4 |
|---|---|---|---|

| Category | Citation of document with indication, where appropriate, of relevant passages | Relevant to claim | CLASSIFICATION OF THE APPLICATION (Int. Cl.4) |
|---|---|---|---|
| X | US - A - 4 309 099 (FLINT)<br>* Fig. 1 *<br><br>-- | 1 | F 16 M 11/22<br>G 03 B 17/56 |
| A | DE - A1 - 3 043 043 (KABUSHIKI KAISHA)<br>* Fig. 1-8 *<br><br>---- | 1 | |

| | TECHNICAL FIELDS SEARCHED (Int. Cl.4) |
|---|---|
| | F 16 M 11/00<br>G 03 B 17/00 |

The present search report has been drawn up for all claims

| Place of search | Date of completion of the search | Examiner |
|---|---|---|
| VIENNA | 11-06-1986 | DRÖSCHER |